# EUROPÄISCHE PATENTSCHRIFT

(11) **EP 1 586 495 B1**
(45) Veröffentlichungstag und Bekanntmachung des Hinweises auf die Patenterteilung: **29.10.2008**
(21) Anmeldenummer: 05000868.9
(22) Anmeldetag: 18.01.2005
(51) Int. Cl.: B62D 25/04

(54) **Aufbaustruktur eines Personenkraftwagens insbesondere eines Cabriolets**
Passenger car body structure, in particular for a convertible
Structure de carrosserie de véhicule automobile, en particulier pour un cabriolet

(30) Priorität: 17.04.2004 DE 102004018745
(43) Veröffentlichungstag der Anmeldung: 19.10.2005
(73) Patentinhaber: Dr. Ing. h.c. F. Porsche Aktiengesellschaft, 70435 Stuttgart (DE)
(72) Erfinder: Klatt, Joachim, 75446 Wiernsheim (DE); Lüning, Gerd, 71254 Ditzingen (DE)

(56) Entgegenhaltungen:
- WO-A-20/04028842
- DE-A1- 2 411 865
- DE-A1- 4 421 095
- JP-A- 10 147 259
- JP-A- 2002 029 259
- US-A- 5 806 917
- US-B1- 6 382 707

## Beschreibung

Die Erfindung betrifft eine Aufbaustruktur eines Personenkraftwagens, insbesondere eines Cabriolets, gem. dem Oberbegriff des Patentanspruchs 1.

Bei bekannten Aufbaustrukturen für Personenkraftwagen, insbesondere für Cabriolets, besteht die Problematik, dass sich bei einem Frontcrash der Vorderwagen und/oder der Hinterwagen der Aufbaustruktur in Fahrzeuglängsrichtung verlagert, so dass der hintere Rand der zumindest einen seitlichen Tür in Kontakt mit der angrenzenden schlossseitigen Aufbausäule gelangt. Aus der JP 10 14 72 59 A, die eine Aufbaustruktur nach dem Oberbegriff des Anspruchs 1 zeigt, ist eine Abstützeinrichtung zwischen einer Fahrzeugtür und einer Fahrzeugsäule angeordnet, die an der Fahrzeugtür aus einem Vorsprung und an der Fahrzeugsäule aus einer hierzu korrespondierenden Einformung besteht. Der Vorsprung und die Einformung sind in Schließstellung der Tür beabstandet zueinander angeordnet.

Infolge von werkzeugbedingten Ausformschrägen der durch Blechpressteile gebildeten Tür bzw. Aufbausäule hat die seitliche Tür beim Kontakt mit der schlossseitigen Aufbausäule das Bestreben, sich zu verformen und ohne Energieaufnahme nach außen hin abzugleiten. Bei einem mit einem Heckmotor versehenen Cabriolet wandert insbesondere der Hinterwagen infolge des Gewichts des Heckmotors nach vorne und führt zum eingangs beschriebenen Abgleiten der seitlichen Tür.

Aufgabe der Erfindung ist es, an einer Aufbaustruktur eines Personenkraftwagens, insbesondere an einem mit einem Heckmotor versehenen Cabriolet, solche Vorkehrungen zu treffen, dass das Crashverhalten der Aufbaustruktur bei einem Frontcrash verbessert wird.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass einerseits durch die Aussteifung der seitlichen Tür und andererseits durch die Anordnung einer bei einem Frontcrash wirksamen Abstützeinrichtung zwischen dem hinteren Rand der zumindest einen seitlichen Tür und der angrenzenden Aufbausäule das Crashverhalten der Aufbaustruktur wesentlich verbessert wird, da die seitliche Tür auch bei einem Frontcrash in ihrer Schließstellung bleibt und zudem in der Lage ist, Kräfte in Fahrzeuglängsrichtung zu übertragen. Bei einem Cabriolet mit einem Heckmotor werden bei einem Frontcrash die Kräfte von der schlossseitigen Aufbausäule über die seitliche Tür in die scharnierseitige Aufbausäule übertragen. Nach einem Frontcrash lässt sich die seitliche Tür problemlos wieder öffnen. Ein Aufspringen der seitlichen Tür bei einem Frontcrash wird zuverlässig verhindert.

Ein Ausführungsbeispiel der Erfindung ist in der Zeichnung näher dargestellt.
Es zeigt
- Fig. 1: eine perspektivische Schrägansicht von hinten auf einen durch ein Cabriolet gebildeten Personenkraftwagen,
- Fig. 2: ein Schnitt nach der Linie II-II der Fig. 1, wobei lediglich die Türaußenhaut und ein mit der Türaußenhaut verbundener Hohlträger dargestellt sind,

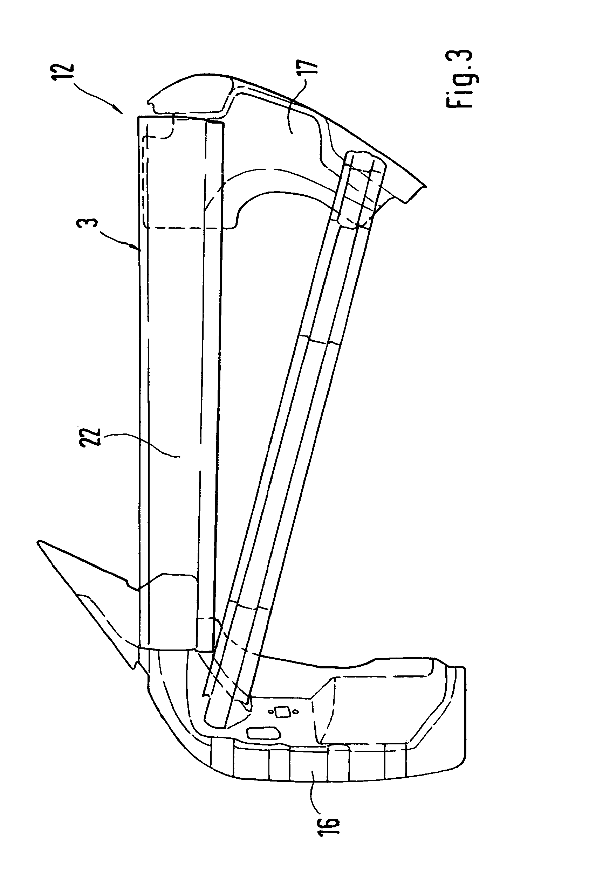

- Fig. 3: eine Ansicht von außen auf eine mit der Türaußenhaut verbundene Tragstruktur, wobei lediglich die Tragstruktur dargestellt ist,

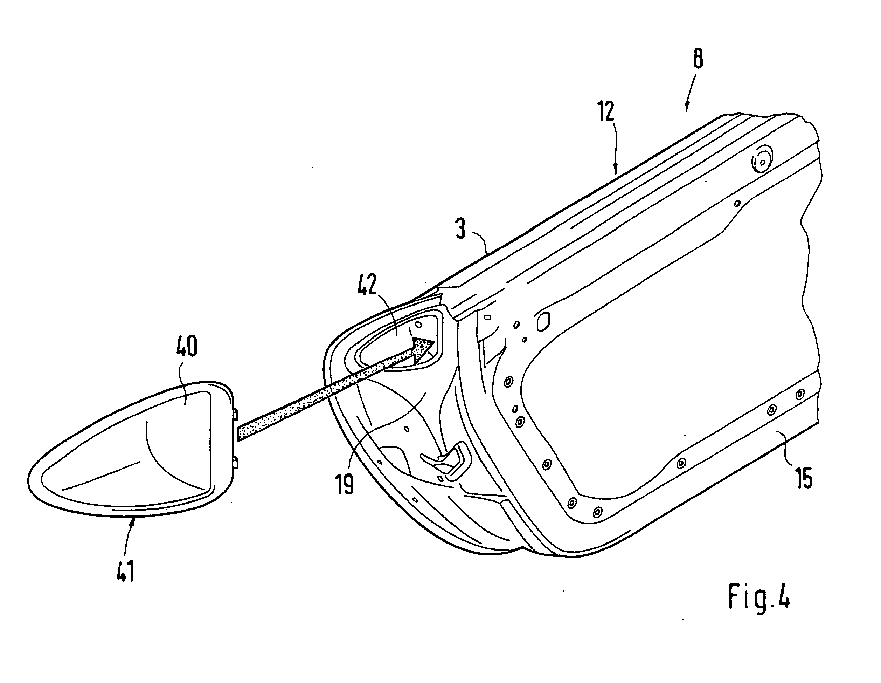

- Fig. 4: eine perspektivische Ansicht von schräg außen auf die schlossseitige Stirnseite der geöffneten Tür,

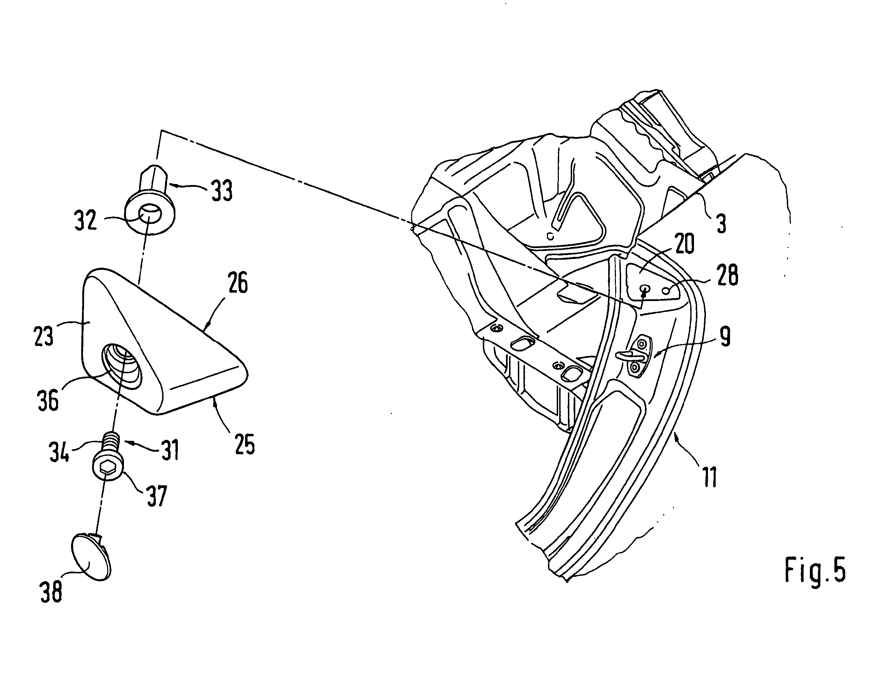

- Fig. 5: eine perspektivische Ansicht von schräg vorne auf das schlossseitige feststehende Aufbauteil mit dem erfindungsgemäßen Abstützteil,
- Fig. 6: einen Schnitt nach der Linie VI-VI der Fig. 1 in größerer Darstellung,
- Fig. 7: eine Ansicht in Pfeilrichtung R der Fig. 5 auf die Bodenfläche des Abstützteiles.

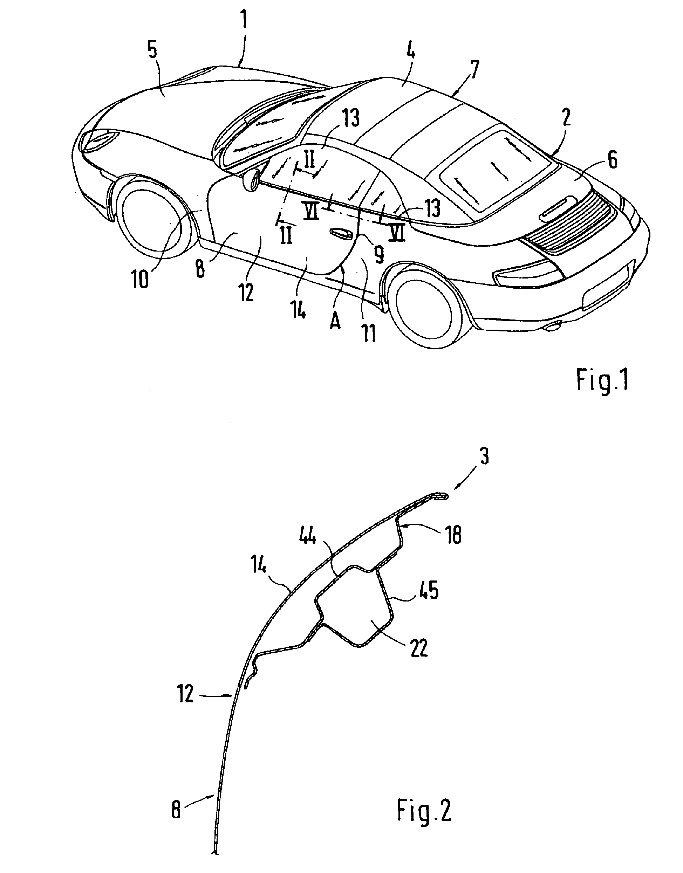

Fig. 1 zeigt einen durch ein Cabriolet gebildeten Personenkraftwagen 1 mit einer Aufbaustruktur 2, die oberhalb einer Gürtellinie 3 ein Verdeck 4 aufweist. Die Aufbaustruktur 2 umfasst einen Vorderwagen 5, einen mit einem nicht näher dargestellten Heckmotor versehenen Hinterwagen 6 sowie an jeder Fahrzeuglängsseite im Bereich einer Fahrgastzelle 7 zumindest eine seitliche Tür 8, die in ihrer Schließstellung A einerseits über nicht näher gezeigte Scharniere und andererseits über eine Schlosseinrichtung 9 mit angrenzenden feststehenden Aufbausäulen 10, 11 zusammenwirkt.

Die scharnierseitige Aufbausäule 10 wird im Ausführungsbeispiel durch eine A-Säule und die schlossseitige Aufbausäule 11 durch eine Mittel- oder B-Säule gebildet. An jeder Fahrzeuglängsseite können auch zwei oder mehrere seitliche Türen 8 angeordnet sein.

Jede seitliche Tür 8 weist einen sich etwa bis zur Gürtellinie 3 erstreckenden Türkörper 12 und eine in Höhenrichtung verstellbare Türscheibe 13 auf. Der Türkörper 12 setzt sich aus einem Außenblech 14 und einem inneren Türrahmen 15 zusammen. Im Bereich der Scharniere ist innerhalb des Türkörpers 12 eine Scharnierverstärkung 16 und im Bereich der Schlosseinrichtung 9 ist innerhalb des Türkörpers 13 eine Schlossverstärkung 17 vorgesehen.

Benachbart der Gürtellinie 3 des Personenkraftwagens 1 erstrecken sich am Türkörper 12 eine nicht näher dargestellte innere Türschachtverstärkung sowie eine äußere Türschachtverstärkung 18. Die seitliche Tür 8 und die angrenzenden Aufbausäulen 10, 11 werden im Ausführungsbeispiel jeweils durch mehrere miteinander verbundene Blechpressteile gebildet.

Der hintere Rand 19 der Tür 8 und der stirnseitige Abschnitt 20 der angrenzenden feststehenden Aufbausäule 11 verlaufen in der Draufsicht gesehen von vorne innen nach hinten außen.

Zwischen dem hinteren Rand 19 der zumindest einen seitlichen Tür 8 und der angrenzenden schlossseitigen Aufbausäule 11 ist örtlich eine bei einem Frontcrash wirksame, die seitliche Tür 8 in ihrer Schließstellung A haltende Abstützeinrichtung 21 vorgesehen und darüber hinaus ist die seitliche Tür 8 etwa in Höhe dieser Abstützeinrichtung 21 durch einen in Fahrzeuglängsrichtung verlaufenden Hohlträger 22 ausgesteift.

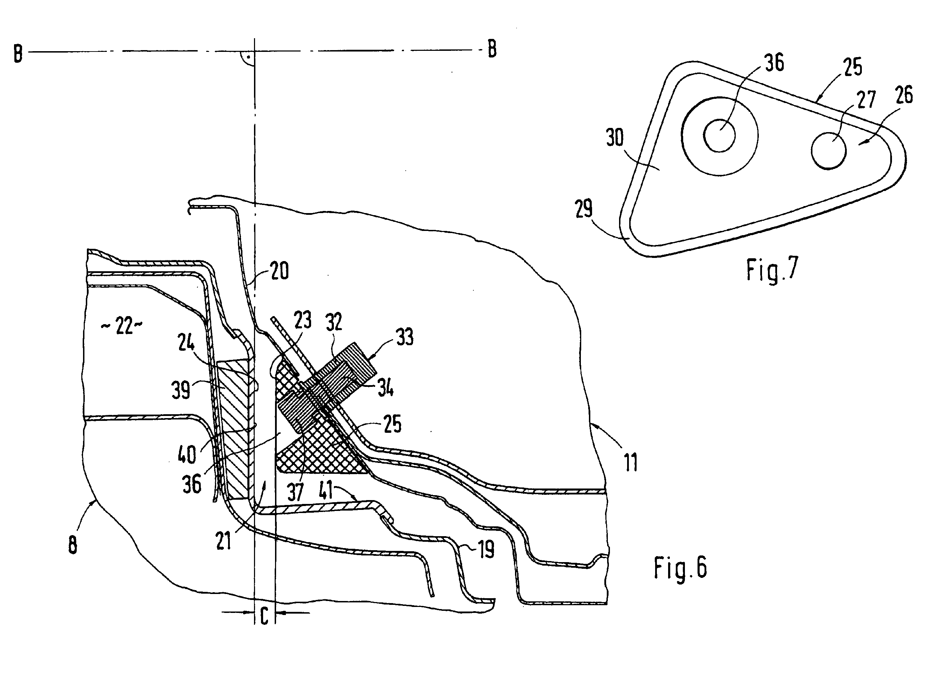

Die Abstützeinrichtung 21 und der Hohlträger 22 sind möglichst hochliegend an der Aufbaustruktur 2, das heißt benachbart der Gürtellinie 3 des Personenkraftwagens 1, angeordnet. Gemäß Fig. 6 weist die Abstützeinrichtung 21 sowohl an der seitlichen Tür 8 als auch an der angrenzenden schlossseitigen Aufbausäule 11 angeordnete, rechtwinkelig zu einer vertikalen Fahrzeuglängsmittelebene B-B verlaufende, beabstandete Abstützflächen 23, 24 auf, die bei einem auf die Aufbaustruktur 2 einwirkenden Frontcrash in gegenseitige Anlage gelangen. In Schließstellung A der seitlichen Tür 8 sind die beiden Abstützflächen 23, 24 in Längsrichtung so weit voneinander entfernt, dass ein problemloses Öffnen der seitlichen Tür 8 möglich ist (Maß C). Die der feststehenden Aufbausäule 11 zugeordnete Abstützfläche 23 ist an einem separaten, auf die Aufbausäule 11 aufgesetzten Abstützteil 25 vorgesehen, das an der Aufbausäule 11 befestigbar ist.

Das Abstützteil 25 wird vorzugsweise durch ein Schmiedeteil gebildet und ist im Ausführungsbeispiel etwa tetraederförmig ausgebildet. Zur lagerichtigen Positionierung des Abstützteils 25 an der Aufbausäule 11 ist an einer Bodenfläche 26 des Abstützteils 25 ein vorstehender Positionierzapfen 27 vorgesehen, der in eine korrespondierende Öffnung 28 der Aufbausäule 11 eingreift. An der Bodenfläche 26 des Abstützteiles 25 ist benachbart einem schmalen umlaufenden randseitigen Steg 29 ein versenkter Aufnahmeabschnitt für einen plattenförmigen Dichtkörper 30 ausgebildet.

Der Dichtkörper 30 ist am Aufnahmeabschnitt festgeklebt. Das Abstützteil 25 ist vorzugsweise durch eine lösbare Schraubverbindung 31 an der Aufbausäule 11 befestigt. Hierzu ist an der feststehenden Aufbausäule 11 ein mit einem Innengewinde 32 versehenes Aufnahmeteil 33 angeordnet, in das eine Befestigungsschraube 34 zum Festlegen des Abstützteiles 25 eindrehbar ist. Am Abstützteil 25 ist eine stufenförmige zylindrische Aufnahme 36 für die Befestigungsschraube 34 vorgesehen. Die zylindrische Aufnahme 36 ist etwa rechtwinkelig zur Bodenfläche 26 ausgebildet. Der Kopfabschnitt 37 der Befestigungsschraube 34 ist durch eine in die Aufnahme 36 einklipsbare Kappe 38 verkleidet.

Die türseitige Abstützfläche 24 wird im Ausführungsbeispiel durch ein keilförmiges Ausgleichselement 39 und einen Teilabschnitt 40 einer vorgelagerten muldenförmigen Abdeckung 41 gebildet. Das keilförmige Ausgleichselement 39 wird durch ein Gussteil gebildet. Das Ausgleichselement 39 ist über ein doppelseitiges Klebeband an der muldenförmigen Abdeckung 41 vormontiert. Beide Bauteile werden durch eine an der hinteren Stirnseite der Tür 8 vorgesehene Ausnehmung 42 in die Tür 8 eingesetzt. Die Abdeckung 41 ist randseitig über Klipsverbindungen mit der Ausnehmung 42 verbunden. In Einbaulage ist zwischen der der Abdeckung 41 abgekehrten Fläche des Ausgleichselements 39 und dem stirnseitigen Ende des Hohlträgers 22 ebenfalls ein doppelseitiges Klebeband vorgesehen. Falls die seitliche Tür 8 und/oder die angrenzende schlossseitige Aufbausäule 11 durch ein Gussteil gebildet werden, ist es denkbar, dass zumindest eine der beiden Abstützflächen 23, 24 einstückig mit der Tür 8 oder der Aufbausäule 11 ausgebildet ist.

Der Hohlträger 22 ist mit einem Ende an die vorderer Scharnierverstärkung 16 und mit seinem anderen Ende an die Schlossverstärkung 17 des Türrahmens 15 angeschlossen und bildet so einen rahmenartigen Verbund. Im Ausführungsbeispiel wird der Hohlträger 22 durch eine hutförmig profilierten Teilbereich 44 der äußeren Türschachtverstärkung 18 und ein aufgesetztes hutförmiges Schließblech 45 gebildet, wobei die Türschachtverstärkung 18 und das Schließblech 45 an gleichgerichteten Flanschen durch Schweißen, Kleben oder dergleichen fest miteinander verbunden sind.

Der Hohlträger 22 könnte jedoch auch durch ein in Fahrzeuglängsrichtung verlaufendes, etwa horizontal ausgerichtetes Rohr gebildet werden, das so dimensioniert ist, das es in Fahrzeuglängsrichtung ohne Ausknicken hohe Kräfte übertragen kann (nicht näher dargestellt).

## Patentansprüche

1. Aufbaustruktur eines Personenkraftwagens, insbesondere eines Cabriolets, mit zumindest einer seitlichen Tür (8) an jeder Fahrzeuglängsseite, wobei die zumindest eine Tür (8) in ihrer Schließstellung (A) einerseits über Scharniere und andererseits über eine Schlosseinrichtung (9) mit angrenzenden feststehenden Aufbausäulen (11) zusammenwirkt und zwischen einem hinteren Rand (19) der zumindest einen seitlichen Tür (8) und der angrenzenden schlossseitigen Aufbausäule (11) eine bei einem Frontcrash wirksame, die seitliche Tür (8) in der Schließstellung (A) haltende Abstützeinrichtung (21) vorgesehen ist und die seitliche Tür (8) in Höhe dieser Abstützeinrichtung (21) durch einen in Fahrzeuglängsrichtung verlaufenden Hohlträger (22) ausgesteift ist, wobei die Abstützeinrichtung (21) und der Hohlträger (22) benachbart einer Gürtellinie (3) des Personenkraftwagens (1) angeordnet sind und die Abstützeinrichtung (21) sowohl an der seitlichen Tür (8) als auch an der angrenzenden schlossseitigen Aufbausäule (11) angeordnete Abstützflächen (23, 24) aufweist, die bei einem auf die Aufbaustruktur (2) einwirkenden Frontcrash in gegenseitige Anlage gelangen, **dadurch gekennzeichnet, dass** an der feststehenden Aufbausäule (11) ein aufgesetztes Abstützteil (25) mit einer rechtwinklig zu einer vertikalen Fahrzeuglängsmittenebene (B-B) verlaufenden Abstützfläche (23) angeordnet und an der Aufbausäule (11) befestigbar ist und dem Abstützteil (25) ein an einer vorgelagerten muldenförmigen Abdeckung (41) angeordnetes Ausgleichselement (39) mit einer parallel zur Abschlussfläche (23) verlaufenden Abstützfläche (24) beabstandet gegenübersteht, welches aus einem Gussteil besteht und mit der Innenseite der Abdeckung (41) verbunden ist und eine vormontierte Baueinheit bildet, die durch eine an der Stirnseite (43) der Tür (8) vorgesehene Ausnehmung (42) eingesetzt ist.

2. Aufbaustruktur nach Anspruch 1, **dadurch gekennzeichnet, dass** das Abstützteil (25) aus einem Schmiedeteil besteht und tetraederförmig ausgebildet ist.

3. Aufbaustruktur nach den Ansprüchen 1 oder 2, **dadurch gekennzeichnet, dass** an einer Bodenfläche (26) des Abstützteils (25) ein vorstehender Positionierzapfen (27) angeordnet ist, der in eine korrespondierende Öffnung (28) der Aufbausäule (11) eingreift.

4. Aufbaustruktur nach den Ansprüchen 1 und 3, **dadurch gekennzeichnet, dass** an der Bodenfläche (26) des Abstützteils (25) ein versenkter Aufnahmeabschnitt für einen plattenförmigen Dichtkörper (30) angeordnet ist.

5. Aufbaustruktur nach den Ansprüchen 1, 2, 3 oder 4, **dadurch gekennzeichnet, dass** an der feststehenden Aufbausäule (11) ein Aufnahmeteil (33) mit einem Innengewinde (32) angeordnet ist, in das eine Befestigungsschraube (34) zum Festlegen des Abstützteils (25) eindrehbar ist.

6. Aufbaustruktur nach den Ansprüchen 1 und 5, **dadurch gekennzeichnet, dass** am Abstützteil (25) eine versenkte zylindrische Aufnahme (36) für die Befestigungsschraube (34) ausgebildet ist, und dass ein Kopfabschnitt (37) der Befestigungsschraube (34) durch eine einclipsbare Kappe (38) verkleidet ist.

7. Aufbaustruktur nach einem der vorhergehenden Ansprüche, **dadurch gekennzeichnet, dass** die türseitige Abstützfläche (24) durch ein keilförmiges Ausgleichselement (39) und einen Teilabschnitt einer vorgelagerten muldenförmigen Abdeckung (41) gebildet wird.

## Claims

1. Passenger car body structure, in particular for a convertible, with at least one side door (8) on each longitudinal side of the vehicle, wherein the at least one door (8) in its closed position (A) interacts with adjacent, fixed body pillars (11) at one end via hinges and at the other end via a lock device (9), and a supporting device (21) which is effective in the case of a head-on crash and retains the side door (8) in the closed position (A) is provided between a rear edge (19) of the at least one side door (8) and the adjacent body pillar (11) on the lock side, and the side door (8) is reinforced with said supporting device (21) by a hollow support (22) running in the longitudinal direction of the vehicle, wherein the supporting device (21) and the hollow support (22) are arranged adjacent to a belt line (3) of the passenger car (1), and the supporting device (21) has supporting surfaces (23, 24) which are arranged both on the side door (8) and on the adjacent body pillar (11) on the lock side and come into mutual contact in the event of a head-on crash acting on the body structure (2), **characterized in that** a fitted supporting part (25) with a supporting surface (23) running at right angles to a vertical longitudinal centre plane (B-B) of the vehicle is arranged on the fixed body pillar (11) and can be fastened to the body pillar (11), and, spaced apart opposite the supporting part (25), there is a compensating element (39) which is arranged on a trough-shaped covering (41) mounted upstream, with a supporting surface (24) running parallel to the end surface (23), is composed of a cast part and is connected to the inside of the covering (41) and forms a preassembled constructional unit which is inserted through a recess (42) provided on the end side (43) of the door (8).

2. Body structure according to Claim 1, **characterized in that** the supporting part (25) is composed of a forged part and is of tetrahedral design.

3. Body structure according to Claim 1 or 2, **characterized in that** a protruding positioning pin (27) which engages in a corresponding opening (28) in the body pillar (11) is arranged on a bottom surface (26) of the supporting part (25).

4. Body structure according to Claims 1 and 3, **characterized in that** a recessed receiving section for a plate-like sealing body (30) is arranged on the bottom surface (26) of the supporting part (25).

5. Body structure according to Claims 1, 2, 3 or 4, **characterized in that** a receiving part (33) with an internal thread (32) into which a fastening screw (34) can be screwed in order to fix the supporting part (25) is arranged on the fixed body pillar (11).

6. Body structure according to Claims 1 and 5, **characterized in that** a recessed, cylindrical receptacle (36) for the fastening screw (34) is formed on the supporting part (25), and **in that** a head section (37) of the fastening screw (34) is covered by a clip-on cap (38).

7. Body structure according to one of the preceding claims, **characterized in that** the supporting surface (24) on the door side is formed by a wedge-shaped compensating element (39) and a sub-section of a trough-shaped covering (41) mounted upstream.

## Revendications

1. Structure de carrosserie d'un véhicule automobile, en particulier d'un cabriolet, comprenant au moins une porte latérale (8) sur chaque côté longitudinal du véhicule, l'au moins une porte (8) coopérant dans sa position de fermeture (A) d'une part par le biais de charnières et d'autre part par le biais d'un dispositif de serrure (9) avec des colonnes de carrosserie (11) fixes adjacentes, et un dispositif de support (21), actif en cas de collision frontale, retenant la porte latérale (8) dans la position de fermeture (A), étant prévu entre un bord arrière (19) de l'au moins une porte latérale (8) et la colonne de carrosserie (11) adjacente du côté de la serrure, et la porte latérale (8), à la hauteur de ce dispositif de support (21), étant rigidifiée par un support creux (22) s'étendant dans la direction longitudinale du véhicule, le dispositif de support (21) et le support creux (22) étant disposés à côté d'une ligne de ceinture (3) du véhicule automobile (1), et le dispositif de support (21) présentant des surfaces de support (23, 24) disposées à la fois sur la porte latérale (8) et sur la colonne de carrosserie (11) adjacente du côté de la serrure, qui, dans le cas d'une collision frontale agissant sur la structure de carrosserie (2), parviennent en appui mutuel, **caractérisée en ce que** sur la colonne de carrosserie fixe (11) est disposée une partie de support (25) posée avec une surface de support (23) s'étendant à angle droit par rapport à un plan médian longitudinal vertical du véhicule (B-B), laquelle peut être fixée à la colonne de carrosserie (11), et un élément de compensation (39) disposé sur un recouvrement en forme de creux monté en avant (41), avec une surface de support (24) s'étendant parallèlement à la surface de support (23), est en regard de la partie de support (25) à distance de celle-ci, cet élément étant constitué d'une pièce coulée et étant connecté au côté intérieur du recouvrement (41) et formant une unité constructive prémontée, qui est insérée à travers un évidement (42) prévu sur le côté frontal (43) de la porte (8).

2. Structure de carrosserie selon la revendication 1, **caractérisée en ce que** la partie de support (25) est constituée d'une pièce forgée et est réalisée en forme de tétraèdre.

3. Structure de carrosserie selon les revendications 1 ou 2, **caractérisée en ce que** l'on dispose sur une surface de fond (26) de la partie de support (25) un tourillon de positionnement saillant (27) qui vient en prise dans une ouverture correspondante (28) de la colonne de carrosserie (11).

4. Structure de carrosserie selon les revendications 1 et 3, **caractérisée en ce qu'**une portion de logement renfoncée pour un corps d'étanchéité en forme de plaque (30) est disposée sur la surface de fond (26) de la partie de support (25).

5. Structure de carrosserie selon les revendications 1, 2, 3 ou 4, **caractérisée en ce que** l'on dispose sur la colonne de carrosserie fixe (11) une pièce de réception (33) avec un filetage interne (32), dans lequel une vis de fixation (34) peut être insérée pour fixer la partie de support (25).

6. Structure de carrosserie selon les revendications 1 et 5, **caractérisée en ce qu'**un logement cylindrique renfoncé (36) est réalisé pour la vis de fixation (34) sur la partie de support (25), et **en ce qu'**une portion de tête (37) de la vis de fixation (34) est revêtue par un capuchon enclipsable (38).

7. Structure de carrosserie selon l'une quelconque des revendications précédentes, **caractérisée en ce que** la surface de support (24) du côté de la porte est formée par un élément de compensation (39) en forme de cale et par une portion partielle d'un recouvrement (41) en forme de creux monté en avant.
